# EUROPEAN PATENT SPECIFICATION

(11) **EP 2 118 198 B1**
(45) Date of publication and mention of the grant of the patent: **25.03.2015**
(21) Application number: 08708911.6
(22) Date of filing: 12.02.2008
(51) Int. Cl.: C08L 67/02, F16L 11/04

(54) **POLYMER COMPOSITION AND PLASTIC TUBE MADE THEREOF**
POLYMERZUSAMMENSETZUNG UND DARAUS HERGESTELLTER PLASTIKSCHLAUCH
COMPOSITION POLYMERE ET TUBE DE PLASTIQUE FABRIQUE A PARTIR DE CETTE COMPOSITION

(30) Priority: 12.02.2007 EP 07002905
(43) Date of publication of application: 18.11.2009
(73) Proprietor: DSM IP Assets B.V., 6411 TE Heerlen (NL)
(72) Inventor: VAN LUMIG, Lambert, NL-6096 AM Grathem (NL); VAN DEN HEUVEL, Paul, Willem, Jan, NL-6225 KK Maastricht (NL); BLOM, Dirk, Gijsbert, NL-6131 KC Sittard (NL)
(74) Representative: Dorrestijn, Antoon
(86) International application number: PCT/EP2008/051678
(87) International publication number: WO 2008/098931

(56) References cited:
- EP-A1- 1 331 087
- EP-A2- 0 591 782
- WO-A-2004/081611
- DE-A1- 10 017 149

## Description

The invention relates to a stretched plastic tube obtainable from a polymer composition comprising a polyester elastomer. The invention more particularly relates to a stretched plastic tube suitable for use in automotive vacuum-brake systems and air-brake systems. The invention also relates to a polymer composition comprising a polyester elastomer, from which a stretched plastic tube according to the invention can be made.

In the context of the present invention with the term polyester elastomer is understood a block copolymer containing hard segments consisting of blocks of a high-melting crystalline or semi- crystalline aromatic or semi-aromatic polyester and soft segments consisting of blocks of a low-melting polymeric component. Such polyester elastomers are also known as copolyester block copolymers, and indicated with the short notation of TPE-E.

A tube typically comprises two end-parts and an elongated part between the two end-part. A tube comprising at least one stretched end-part obtained by mechanically stretching of at least a section of that end-part, is herein considered to be a stretched plastic tube. The elongated part and optionally one of the end-parts do not have to be subjected to mechanically stretching.

Basic requirements for plastic tubes used in automotive vacuum-brake systems and air-brake systems are that these tubes have a proper balance in flexibility and rigidity, are sufficiently temperature resistant, and are resistant against the chemical environment, like ozone, present under the engine hood in cars. Conventionally, these tubes were made of polyamide 12. Amongst others due to the trend towards more compact cars, higher temperatures are generated in the automotive engine section, making the use of polyamide 12 in this application critical. In view thereof, a search was made for better performing materials. As a replacement material, polyester elastomers have found their way into this application, because of their better performance, in particular stiffness retention, at higher temperatures. The polyester elastomers used in plastic tubes for automotive air-brake systems generally are black, carbon black filled materials, like many other plastic materials used for other automotive under-the-bonnet applications. These polyester elastomer materials in general also show a good resistance against environmental influences. It has been observed however, that for more demanding situations, the ozone resistance of the airbrake tubes made of the said polyester elastomers is not sufficient, and the tubes can show environmental stress cracking when subjected to an environment comprising ozone. The environmental stress cracking is visible from crack formation and embrittlement of the tube ends. The said environmental stress cracking occurs at those places where the tubes are subjected to mechanical stretching prior to mounting the tubes to an engine block or to a brake system. Such a mechanical stretching occurs for example, when a barbed hose fitting or other type of hose fitting comprising thicker parts, is inserted in an end-part of the plastic tube.

A barbed hose fitting is a hose fitting comprising backward projecting thickenings, intended to prevent easy extraction of the hose fitting from the tube. Fittings are needed for the mounting step. Barbed hose fittings can be produced and mounted economically and therefore are applied more and more. For that reason there is a need for plastic tubes, suitable for use in automotive air-brake systems, which are more ozone resistant.

The aim of the invention is therefore to provide a stretched plastic tube, which has improved ozone resistance compared to the known plastic tubes obtainable from a polymer composition comprising a polyester elastomer. This aim has been achieved with a stretched plastic tube comprising two end-parts, at least one of the end parts is a stretched end-part obtained by mechanically stretching at least a section of that end part, and an elongated part between the end parts, which stretched plastic tube is obtained from a plastic tube comprising at least an outer surface layer consisting of a polymer composition comprises, next to at least 50 wt.% of a copolyester elastomer, at least 0.7 wt.% of a grease, an oil and/or a wax component, relative to the total weight of the polymer composition

The effect of the stretched plastic tube according to the invention is that the stretched plastic tube has a better ozone resistance, demonstrated by a reduced tendency to show environmental stress cracking in an ozone containing environment, than the known stretched plastic tube made of a corresponding polyester elastomer comprising polymer composition not comprising the grease, oil and/or wax component. This effect is really surprising, and in particular the occurrence thereof at relative low amounts of grease, oil and/or wax component.

The ozone resistance can be tested by subjecting stretched plastic tubes to an ozone containing environment, as is described, for example in ISO 1431, which relates to resistance to ozone cracking of vulcanized and thermoplastic rubbers, and DIN 53509-1, which relates to: "Bestimmung der Bestandigkeit gegen Rissbildung unter Ozone Einwirkung" (Determination of resistance against cracking under the influence of ozone).

A wax is herein understood to be a material that is solid at room temperature with a structure that can vary between past-like to hard and brittle. More particular, according to the definition of the German Society for Fat Technology, a wax possesses the following properties: kneadable at 20°C, brittle to solid, coarse to finely crystalline, translucent to opaque, relatively low viscosity even slightly above the melting point, not tending to stringiness, consistency, and solubility depending on the temperature, and capable of being polished by slight pressure. (cf. Kirk-Othmer Encyclopedia of Chemical Technology, John Wily & Sons Inc, Vol. 25, WAXES, page 1)

The wax componentcan be a natural wax and/or a synthetic wax. Suitably the natural wax is a fossil wax and/or a non-fossil wax, and physically and/or chemically modified derivatives thereof. Physical processes to which natural waxes can be subjected are, for example, refining by distillation or extraction. Chemical processes such as hydrogenation, bleaching, and oxidation, can also be used.

Physical and chemical treatment can be combined. The objective of these processes is to obtain a wax that is as pure as possible. Where not stated otherwise in the designation of the specific waxes mentioned further herein, the designation of the waxes by their generic names is herein understood to include the physically and/or chemically modified derivatives thereof.

Examples of suitable fossil natural waxes, also called mineral waxes, are petroleum waxes and lignite, peat and montan waxes. Suitable nonfossil natural waxes are, for example, animal waxes such as bee waxes, vegetable or vegetal waxes such as carnauba waxes, and bacterial waxes.

Suitably the synthetic wax is a partially synthetic wax and/or a fully synthetic wax. Partially synthetic waxes are natural waxes or waxlike materials modified with chemical processes such a esterification, amidation or neutralization of acidic waxes. Examples of suitable partially synthetic waxes are fatty acids, fatty alcohols, fatty acid amide waxes and fatty acid ester waxes. Suitable fully synthetic waxes are, for example, polyolefine waxes and Fisher Tropsch waxes.

The fatty acids in the fatty acid amide waxes and fatty acid ester waxes suitably are C10-C30 fatty acids. Also fatty acids with less than 10 carbon atoms or with more than 30 carbon atoms may be used. For example, the fatty acid wax may be a fatty acid wax obtainable from a dimer fatty acid with 36 carbon atoms, available from Unichema under the trade name Pripol. Preferably the fatty acids comprise 12-24 carbon atoms.

Suitably the fatty acid amide wax is an diamide obtainable from a fatty acid and a diamine. Suitable diamines are ethylene dimaine, 1,4-diamino butane and 1,6-diamino hexane. Examples of suitable fatty acid amide waxes are, stearylamide and ethylene bisstearylamide.

Suitably the fatty acid wax is an ester obtainable from a fatty acid and a polyol. Suitable polyols are ethylene diol, glycerol and pentaerythritol. Examples of suitable fatty acid ester waxes are the mono-, di-, tri- and tetra-ester of stearic acid and pentaerythritol, and mixtures thereof, and mono-, di-, and tri-ester of stearic acid and glycerol, and mixtures thereof.

The fatty acid wax may also be an ester obtainable from a fatty acid and a linear or branched alcohol. Preferaby the alcohol is a linear alcohol with at least 8 carbon atoms and preferably 10-24 carbon atoms, more preferably 12-18 carbon atoms. Suitably the alcohol is lauryl alcohol or stearyl alcohol.

Examples of suitable oils are hydrogenated oils, such as hydrogenated castor oil and hydrogenated rycinus oil.

For an overview on waxes which can be used in the composition according to the invention, reference is made to the Ullman: Waxes, Wiley-VCH Verlag GmbH & Co., KGaA, Weinheim, 10.1002/14356007.a28.103, pages 1-59. Kirk-Othmer Encyclopedia of Chemical Technology, John Wily & Sons Inc, Vol. 25, WAXES, page 1-25.

For adjusting the melting range and the viscosity of the wax compound, other compounds such as metal soaps, such as calcium stearate, and phthalic acid esters may be added. Suitably the phthalic acid ester is an ester of phthalic acid and a linear or branched alcohol. Preferaby the alcohol is a linear alcohol with at least 4 carbon atoms and preferably 4 - 24 carbon atoms, more preferably 8 - 12 carbon atoms. Suitably the alcohol is octyl alcohol, lauryl alcohol or stearyl alcohol..

Preferably, the metal soaps and/or phthalic acid esters, are present in a total amount in the range of 0-15 wt.%, relative to the total weight of the wax material, grease and oil.

More particularly the wax has melting temperature of at least 25°C and a viscosity at 10 °C above the melting temperature of at most 10.000 mPa·s.

With the term melting temperature is herein understood the temperature, measured by DSC with a heating rate of 10°C/min, falling in the melting range and showing the highest melting rate.

In a preferred embodiment of the invention the polymer composition comprises a wax component having a melting temperature of at least 30°C. More preferably, the melting temperature is in the range of 35 - 180 °C, 40 - 150 °C, 45 - 120 °C, or even more preferably 50 - 100 °C. The advantage of higher minimum melting point is not only easier processing of the wax during production of the composition, but in particular less problems with exudation of the wax from the tubes made of the compositions.

Also preferably, the wax component has a melt viscosity, at 10 °C above the melting temperature, of at most 10,000 mPa·s, more preferably in the range of 10-5,000 mPa·s.

Preferably, the the wax component is chosen from the group consisting fatty acids, fatty acid esters, fatty acid amides, fatty alcohols, combinations of fatty acids and polyols, natural waxes and their derivatives, hydrogenated oils, paraffinic oils, more preferably from the group consisting of esters of polyols and fatty acids, amides of polyamines and fatty acids, and hydrogenated oils.

The amount of the grease, oil and/or wax component present in the polymer composition according to the invention may vary over a wide range. With a higher minimum amount the ozone resistance increase, whereas at very high levels the increase in ozone resistance levels off. In order not to offset other properties, such as exudation of the oil, grease or wax component, the maximum amount thereof is preferably kept limited. Preferably the said component is present in an amount of 0.7- 4 wt.%, 0.8- 3 wt.%, 0.9- 2.5 wt.%, or even 1.0 - 2 wt.%, relative to the total weight of the polymer composition. Preferably, the minimum level of said, grease or wax component is greater than 0.8 wt.%, more preferably greater 1.0 wt.% and even more preferably greater than 1.2 wt.%.

The advantage of a higher amount of the said, grease or wax component is that the ozone resistance is increased and that in case any cracks are formed the crack growth is reduced or even fully stopped.

The copolyester elastomer in the polymer composition suitably comprises or is a copolyester-ester elastomer, a copolyether-ester elastomer, and/or a copolycarbonate-ester elastomer, and preferably comprises, or is a copolyether-ester elastomer.

The copolyester elastomer comprises at least 50 wt.%, preferably at least 60 wt.%, more preferably at least 70 wt%, even more preferably at least 85 wt% and most preferably at least 90 wt%, relative to the total weight of the polymer composition. A high proportion of copolyester elastomer results in enhanced ozone resistance of the total polymer composition due to the improved ozone resistance of the copolyester elastomer component.

With a copolyether ester elastomer is herein understood a block copolymer containing hard segments consisting of blocks of a high-melting crystalline or semi-crystalline aromatic or semi-aromatic polyester and soft segments consisting of blocks of a low-melting polyether. Suitably, the copolyether ester elastomer is made of hard polyester segments made up of repeating units derived from an aromatic dicarboxylic acid and an aliphatic diol, and of soft segments made up of polyglycolethers, also known as poly(alkylene oxides). Examples of poly(alkylene oxides) that are suitable soft segments in the copolyether ester elastomer are poly(ethylene oxide), poly(propylene oxide) and poly(tetramethylene oxide), and random copolymers and block-copolymers thereof.

Preferably, the soft segment in the copolyether ester elastomer is made up of poly(tetramethylene oxide). A comprehensive description of copolyether ester elastomers and their preparation can be found in Encyclopedia of Polymer Science and Technology, Volume 12, pages 76-177 (1985) and the references reported therein.

With a copolyester ester elastomer is herein understood a block copolymer containing hard segments consisting of blocks of a high-melting crystalline or semi-crystalline aromatic or semi-aromatic polyester and soft segments consisting of blocks of a low-melting polyester diol. Suitably, the copolyester ester elastomer is made of hard polyester segments made up of repeating units derived from an aromatic dicarboxylic acid and an aliphatic diol, and of soft segments made up of either an aliphatic diol and an aliphatic dicarboxylic acid or a lactone, or a combination thereof, wherein the hard segments and the soft segments can be connected with a urethane group. Copolyester ester elastomers as well as the preparation thereof, are described, for example, in European patent EP-0102115-B1.

With a copolycarbonate ester elastomer is herein understood a block copolymer containing hard segments consisting of blocks of a high-melting crystalline or semi-crystalline aromatic or semi-aromatic polyester and soft segments consisting of blocks of a low-melting polycarbonate containing polymeric component. Suitably, the copolycarbonate ester elastomer is made of hard polyester segments made up of repeating units derived from an aromatic dicarboxylic acid and an aliphatic diol, and of soft segments made up of repeating units of an aliphatic carbonate, and/or soft segments made up of randomly distributed repeating units of an aliphatic carbonate and either an aliphatic diol and an aliphatic dicarboxylic acid or a lactone, or a combination thereof, wherein the hard segments and the soft segments can be connected with a urethane group. Copolycarbonate ester elastomers as well as the preparation thereof, are described, for example, in European patent EP-0846712-B1.

The aromatic dicarboxylic acid in the hard segments of the copolyester elastomer can be, for example, terephthalic acid, naphthalene dicarboxylic acid and biphenyl dicarboxylic acid, or a mixture thereof. The aliphatic diol can be, for example, ethylene diol (also known as ethylene glycol), propylene diol, butylene diol (also known as 1,4-butane diol), hexamethylene diol, or a mixture thereof. The hard segments in the copolyester elastomer in the thermoplastic polymer composition are preferably made up of repeating units derived from an aromatic dicarboxylic acid comprising terephthalic acid and an aliphatic diol comprising ethylene glycol and/or 1,4-butane diol. More preferably, the hard segments are made of terephthalic acid and 1,4-butane diol.

The copolyester elastomer in the thermoplastic polymer composition preferably is a copolycarbonate ester elastomer or a copolyester ester elastomer, more preferably a copolycarbonate ester elastomer. The advantage thereof is that the ozone resistance is even further improved.

The thermoplastic polymer composition may comprise, next to the copolyester elastomer and the grease, oil and/or wax component, also other components. The other components that may be present can be any additive that is suitable for use in plastic tubes, more particular plastic tubes for vacuum- and air-brake systems.

Suitably, the polymer composition comprises dispersed particles of a solid additive. The effect of the polymer composition comprising the said dispersed particles in combination with the grease, oil and/or wax component is that the deteriorating effect of such dispersed particles on the ozone resistance is reduced compared to the corresponding compositions not comprising the grease, oil and/or wax component.

In a preferred embodiment of the invention, the solid additive comprises a pigment, preferably a black pigment, such as carbon black (Pigment black 7), iron oxide black (Pigment black 11) and iron titanium brown (Pigment black 12). Further information on these black pigments can be found in: Albrecht Müller, Coloring of Plastics, ISBN 1-56990-352-2., page 77. More preferably the black pigment is carbon black. Carbon black has been found to have a distinct negative effect on the ozone resistance. In combination with the grease, oil and/or wax component, the negative effect is significantly reduced.

Preferably, the pigment, and more particularly the carbon black is present in the polymer composition in an amount in the range 0 - 2.0 wt.%, more preferably 0.01 - 1 wt.%, more preferably 0.1 - 0.5 wt.%, relative to the total weight of the polymer composition.

The carbon black content in a thermoplastic polymer composition can suitably be determined with TGA measurements, for example with the method according to ASTM 5630, performed in an oxygen free, and subsequently in an oxygen containing environment.

Suitably, the thermoplastic polymer composition comprises at least one additive chosen from the group consisting of stabilizers, colorants and processing aids. Suitable processing aids include lubricants and release agents. Examples of suitable stabilizers are UV stabilizers, heat stabilizers, anti-oxidants and anti-ozonants. Examples of suitable anti-ozonants are substituted p-phenylenediamines (e.g. N, N'-diphenyl-p-diphenylenediamine), cyclic acetals (e.g. Vulkazon® AFS/LG) and enol ethers (e.g. Vulkazon® AFD).

Also suitably, the polymer composition comprises an organic colorant, preferably an organic black colorant, more preferably nigrosine. Organic blacks, such as nigrosine are advantageously applied, when the plastic tubes have to be made in black. The advantage thereof is that the stretched plastic tube made thereof has a better ozone resistance compared to a corresponding black plastic tube with carbon black. Nigrosine is a commercial product supplied by different suppliers (e.g. PD Industries, Maharashtra, India; Lanxess, Pennsylvania, USA; Royce Associates, New Jersey, USA; and Anirox Pigments Ltd, West Bengal, India) and comes in different variants, such as water soluble nigrosine, oil soluble nigrosine and alcohol solube nigrosine. Preferebly the colorant is an oil soluble nigrosine.

Preferably, the organic colorant, and more particularly the nigrosine is present in the polymer composition in an amount in the range 0 - 2.0 wt.%, more preferably 0.01 - 1 wt.%, more preferably 0.1 - 0.5 wt.%, relative to the total weight of the polymer composition.

Suitably the polymer composition comprises a blend of pigments and colorants.

Also suitably, the polymer composition comprises at least one additional additive. With an additional additive is meant a component that is different from the copolyester elastomer, the grease, oil and/or wax component, colorants and pigments.

The additional additive may be any additive suitable for use in thermoplastic elastomers and in plastic tubes made thereof. The additional additive may be present in an amount varying over a large range. The amount may be in the range of 0-30 wt.% or even higher, preferably 0-20 wt.%, relative to the total weight of the polymer composition. More, preferably, the at least one additional additive is present in an amount of 0.01- 10 wt.%, more preferably 0.1-5 or even 0.2 -2 wt., relative to the total weight of the polymer composition.

Suitably, the at least one additional additive is a stabilizer, a processing aid, a flame retardant, a nucleating agent, an inorganic filler or a mixture thereof.

Preferably, the polymer composition comprises as the at least one additional additive at least a stabilizer, more preferably an anti-ozonant.

In a preferred embodiment of the invention, the polymer composition comprises
(a) at least 50 wt.% of a copolyester elastomer, preferably at least 60 wt.%, and more preferably greater than 90 wt.%,
(b) at least 0.7 wt.% of a wax material, preferably at least 0.8 wt.%,
(c) 0.01- 2 wt.% of a pigment and/or a colorant, and
(d) optionally at least one additional additive,
   wherein the weight percentages (wt.%) are relative to the total weight of the polymer composition.

In another preferred embodiment, the polymer composition consists of
(a) a copolyester elastomer, comprising at least 50 wt.% (preferably at least 60 wt.%) of a copolyetherester elastomer,
(b) 0.5 - 5 wt.% (preferably 0.7 to 4 wt.%) of a grease, an oil and/or a wax material, the wax material chosen from the group consisting of esters of polyols and fatty acids, amides of polyamines and fatty acids, and hydrogenated oils, and mixtures thereof,
(c) 0.01- 2 wt.% of a pigment and/or a colorant,
(d) 0-10 wt.% of at least one additional additive,
wherein the weight percentages (wt.%) are relative to the total weight of the polymer composition, and the sum of (a) - (d) is 100.

The plastic tube may be a composite plastic tube consisting of a multilayered structure, or a single layer tube fully consisting of the said polymer composition.

The advantage of the plastic tube comprising at least an outer surface layer consisting of the said polymer composition is that, as described above, after stretching at least one of the ends the ozone resistance thereof is improved.

The outer surface layer consisting of the said polymer composition may have a thickness varying over a large range, whereas the maximum is limited in practice by the wall thickness the tube. Preferably the outer surface layer has a thickness of at least 0.025 mm, preferably at least 0.05 mm and even at least 0.1 mm. Still more preferably, the thickness is at least 0.2 mm.

The composite plastic tube comprising an outer surface layer with the said composition may further comprise, next to the outer surface layer, an inner surface layer and optionally at least one inter layer laying in between the outer surface layer and the inner surface layer.

Suitably, the inner surface layer and outer surface layer and also the optional inter layer or layers consist all of a polymer composition comprising a copolyester elastomer.

In case the composite plastic tube consists of an inner surface layer and an outer surface layer, the inner surface layer and outer surface layer consist of different copolyester elastomer comprising polymer compositions. The compositions may be different in that the composition of the inner layer does not comprise a a grease, an oil and/or a wax component, and/or may also be different in that it comprises another component not comprised by the composition of the outer surface layer.

The polymer composition of the inner layer or inner layers may comprise or consist of a thermoplastic polymer composition comprising a copolyester elastomer. It may as well comprise or consist of another polymer composition, as long as this does not eliminate the ozone resistant properties of the composite plastic tube according to the invention.

The plastic tube can be made with a process comprising an extrusion step, wherein at least the outer layer is obtained from the thermoplastic polymer composition according to the invention or a preferred embodiment thereof. The composite plastic tube can be made with a process comprising a co-extrusion step. In such a process, two or more materials are extruded through a single die with two or more orifices arranged so that the extrudates merge and weld together into a single product, in the case of the present invention, the product being a multilayered plastic tube. The said processes may optionally comprise a shaping step. In such a shaping step the plastic tube can be given a form with an elongated part comprising various bendings and/or curves suitable for the targeted automotive brake system. The shaping step may be performed by any shaping process that is suitable for bending and shaping plastic tubes. Suitably, the shaping step is a heat-shaping step, i.e. a shaping step wherein the shaping process involves heating, deformation and subsequently cooling, of the plastic tube.

The plastic tube and preferred embodiments thereof, which can be a composite plastic tube as well as the plastic tube integrally consisting of the thermoplastic polymer composition according to the invention, can be converted into a stretched plastic tube according to the invention with a process comprising a stretching step, i.e. a step wherein at least one end-part is subjected to mechanical stretching. The said mechanical stretching may be accomplished, for example, with inserting a hose fitting having a part that is inserted into the tube having an outer diameter larger than the inner diameter of the plastic tube. The hose fitting may be any type of tubular fitting that is suited for mounting an airbrake system tube to an engine. Suitably, the hose fitting is a cylindrical hose fitting or a conical hose fitting. Also suitably, the hose fitting comprises tapered segments, i.e. segments that gradually increase or diminish in size in the elongated direction of the fitting. Suitably, the tapered segments have a barb shape, i.e. have a sharp edge projecting backward from that end of the hose fitting that is intended to being inserted into the tubes.

As a result of the said mechanical stretching the stretched end-part comprises a stretched section having a diameter that is larger than the diameter of the elongated part of the plastic tube and the end-part prior to stretching. Suitably, the elongated part has a first outer diameter D1 and the stretched end-part comprises a stretched section having a second outer diameter D2, D2 being at least 1% larger than D1. Preferably D2 is at least 2%, more preferably at least 5%, or even at least 10% larger than D1. D2 might even be at least 20% larger than D1. The larger the difference between D1 and D2 is, the more pronounced the improvement in ozone resistance according to the invention is.

The plastic tube according to the invention and the stretched plastic tube made thereof may have a first outer diameter (D1) varying over a large range, and may be as low as, for example, 3 mm and even lower, and as large as, for example, 25 mm, and even larger. For automotive applications, the diameter is preferably in the range of 5-20 mm, more preferably of 8-15 mm, or even in the range 9-12.5 mm. Generally, the smaller D1 is, the larger the increment in D2 will be in practice, and the larger the effect according to the invention will be.

The plastic tube according to the invention as well as the stretched plastic tube made thereof may also have a wall thickness (T) varying over a large range. Suitably, the plastic tube and stretched plastic tube made thereof have a wall thickness of at least 0.2 mm, preferably 0.5-3 mm, or even 1-2 mm.

The invention also relates to a process for making a stretched plastic tube according to the invention. The process according to the invention comprises a stretching step. The stretching step may be integrated in the process for making the plastic tube, resulting in a process comprising in this order, a (co)extrusion step, optionally a (heat) shaping step, and a stretching step.

The invention also relates to an automotive brake system, in particular a vacuum brake system and an airbrake tubing system, comprising a stretched plastic tube according to the invention, or any preferred embodiment thereof, and a hose fitting inserted into the stretched end-part.

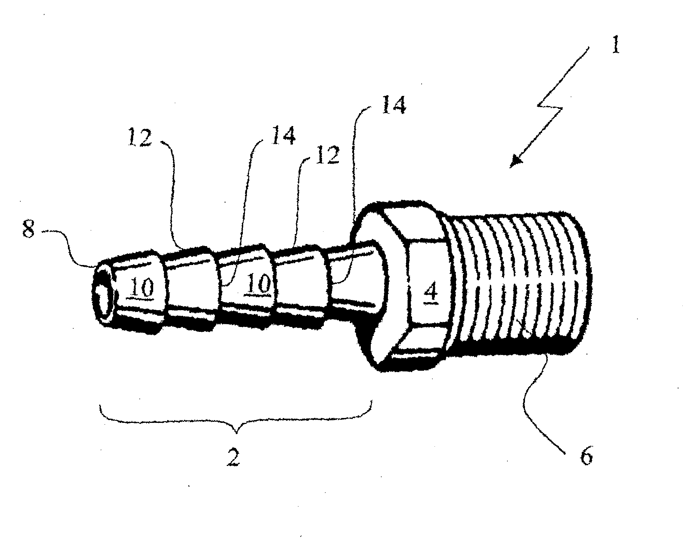

FIG. 1. Schematic 3-dimensional elevational view of a cylindrical barbed hose fitting.

FIG. 1. shows a schematic 3-dimensional elevational view of a cylindrical barbed hose fitting. The cylindrical barbed hose fitting (1) comprises a cylindrical part (2), a central part (4) and a threaded part (6). The cylindrical part (2) has an end (8) and comprises several individual tapered barbed segments (10) recognizable by a gradual diminishing diameter (12) and a sharp edge (14) pointing away from the end (8).

The invention is further illustrated with the following Examples and Comparative Experiments.

### Materials

- TPE-E:: Arnitel EM630-H (ex DSM Engineerign Plastics B.V., The Netherlands)
- Wax I:: Paracera 45: Carnauba wax (ex Paramelt B.V., The Netherlands BV)
- Wax II:: Loxiol® G32: Ester wax (ex Cognis Oleochemicals GmbH, Germany(
- Wax III:: Loxiol® EP12: Glyceryl-mono-stearate (ex Cognis Oleochemicals GmbH, Germany)

Elastomer compositions comprising TPE-E and a wax component were produced on an ZE-25 extruder (Berstorff, Germany) using standard conditions and routine procedures for preparing TPE-E based elastomer compositions. The compositions were injection moulded on an Arburg 150 injection molding machine to form plaques with dimensions of 80 x 80 x 2 mm. From on an plaques strips with dimension 40x15x2 mm were cut perpendicular to the injection molding direction. The plaques were put in an oven at 190°C for 10 minutes to simulate a heat-forming step, and subsequently cooled-down outside the oven. The cooled strips were plied around a steel tube of 15 mm diameter and fixed firmly with steel wire, thus to form stressed strips. The stressed strips so produced were subjected to an ozone environment. The Ozone testing was done in an ozone cabinet of Hampden Test Equipment Ltd, model P3-C8, Northampton England, according to ISO 1431.

The same compositions were extruded to form tubes of 9mm diameter and 2mm wall-thickness. The tubes were put in an oven at 190°C for 10 minutes to simulate a heat-forming step, and subsequently cooled-down outside the oven. A tapered fitting was inserted into the tube ends thereby stretching the tube ends. The tubes comprising the inserted tapered fittings were subjected to an ozone environment as described above.

The compositions as well as test conditions and duration for the ozone treatment and the test results thereof are given in the Table I below.

**Table I: TPE-E compositions (in wt.%), test conditions and duration for the ozone treatment, and test results thereof.**

| Compositions | | I | II | III | IV |
|---|---|---|---|---|---|
| TPE-E | | 100 | 99.0 | 99.0 | 98.5 |
| Wax I | | - | 1.0 | - | - |
| Wax II | | - | - | 1.0 | - |
| Wax III | | - | - | - | 1.5 |
| Ozone treatment | Ozone conditions | | | | |
| Plaques | 7 pphm O₃, 40°C, 70 hrs | 25 | 0 | 0 | 0 |
| Plaques | 7 pphm O₃, 40°C, 400 hrs | >26 | 0 | 0 | 0 |
| Tubes | 2 pphm O₃, 40°C, 70 hrs | >26 | 3a | 0 | - |
| Tubes | 2 pphm O₃, 40°C, 1414 hrs | >26 | 4c | 3b | - |

Performance rating: 0 means no visible defects; 'a' means smallest thinkable dots; 'b' means dot has become a very small superficial line at surface; 'c' means small superficial line at surface; 25 & >26 means large and open cracks.

## Claims

1. Stretched plastic tube comprising two end-parts, at least one of the end-parts is a stretched end-part obtained by mechanically stretching of at least a section of that end part, and an elongated part between the end-parts, wherein the stretched plastic tube is obtained from a plastic tube comprising at least an outer surface layer consisting of a polymer composition comprising at least 50 wt% of a copolyester elastomer and at least 0.7 wt.% of a grease, an oil and/or a wax component, relative to the total weight of the polymer composition.

2. Stretched plastic tube according to claim 1, wherein the said component is a wax component having a melting temperature of at least 30°C.

3. Stretched tube according to claim 1 or 2, wherein the wax component has a melt viscosity, at 10 °C above the melting temperature, of at most 10,000 mPa·s.

4. Stretched plastic tube according to any of claims 1-3, wherein the wax component is chosen from the group consisting of esters of polyols and fatty acids, amides of polyamines and fatty acids, and hydrogenated oils.

5. Stretched plastic tube according to any of claims 1-4, wherein the grease, oil and/or wax component is present in an amount of 0.7- 5 wt.%, relative to the total weight of the polymer composition.

6. Stretched plastic tube according to any of claims 1-5, wherein the copolyester elastomer is a copolyester-ester elastomer, a copolyether-ester elastomer, and/or a copolycarbonate-ester elastomer.

7. Stretched plastic tube according to any of claims 1-6, wherein the polymer composition comprises dispersed particles of a solid additive.

8. Stretched plastic tube according to claim 7, wherein the solid additive comprises a pigment.

9. Stretched plastic tube according to claim 8, wherein the pigment is present in an amount in the range 0 - 2.0 wt.%, relative to the total weight of the polymer composition.

10. Stretched plastic tube according to any of claims 1-9, wherein the polymer composition comprises an organic colorant.

11. Stretched plastic tube according to any of claims 1-10, wherein the polymer composition comprises at least one additional additive, the additional additive being different from colorants and pigments.

12. Stretched plastic tube according to claim 11, wherein the additional additive is present in an amount of 0.01- 10 wt.%, relative to the total weight of the polymer composition.

13. Stretched plastic tube according to claim 1, wherein the polymer composition consists of:
(a) a copolyester elastomer, comprising at least 50 wt.% of a copolyetherester elastomer,
(b) 0.5 - 5 wt.% of a grease, an oil and/or a wax material, the wax material chosen from the group consisting of esters of polyols and fatty acids, amides of polyamines and fatty acids, and hydrogenated oils, and mixtures thereof,
(c) 0.01- 2 wt.% of a pigment and/or a colorant,
(d) 0-10 wt.% of at least one additional additive,
wherein the weight percentages (wt.%) are relative to the total weight of the polymer composition, and the sum of (a) - (d) is 100.

14. Stretched plastic tube according to any one of claims 1-13, wherein the outer surface layer has a thickness of at least 0.025 mm.

15. Process for making a stretched plastic tube according to any one of claims 1 - 14, comprising, in this order, a (co)extrusion step, optionally a (heat)-shaping step, and a stretching step.

16. Automotive brake system, comprising a stretched plastic tube comprising a stretched end-part according to any one of claims 1 - 14 and a hose fitting inserted into the stretched end-part.

## Patentansprüche

1. Verstreckter Kunststoffschlauch mit zwei Endteilen, wobei mindestens eines der Endteile ein durch mechanisches Verstrecken mindestens eines Abschnitts des Endteils erhaltenes verstrecktes Endteil ist, und einem langgestreckten Teil zwischen den Endteilen, wobei der verstreckte Kunststoffschlauch aus einem Kunststoffschlauch mit mindestens einer Außenoberflächenschicht aus einer Polymerzusammensetzung, die mindestens 50 Ges.-% eines Copolyesterelastomers und mindestens 0,7 Gew.-% einer Schmierfett-, einer Öl- und/oder einer Wachskomponente, bezogen auf das Gesamtgewicht der Polymerzusammensetzung, umfasst, erhalten wird.

2. Verstreckter Kunststoffschlauch nach Anspruch 1, wobei es sich bei der Komponente um eine Wachskomponente mit einer Schmelztemperatur von mindestens 30°C handelt.

3. Verstreckter Schlauch nach Anspruch 1 oder 2, wobei die Wachskomponente eine Schmelzeviskosität bei 10°C oberhalb der Schmelztemperatur von höchstens 10.000 mPa·s aufweist.

4. Verstreckter Kunststoffschlauch nach einem der Ansprüche 1-3, wobei die Wachskomponente aus der Gruppe bestehend aus Estern von Polyolen und Fettsäuren, Amiden von Polyaminen und Fettsäuren und hydrierten Ölen ausgewählt ist.

5. Verstreckter Kunststoffschlauch nach einem der Ansprüche 1-4, wobei die Schmierfett-, Öl-und/oder Wachskomponente in einer Menge von 0,7-5 Gew.-%, bezogen auf das Gesamtgewicht der Polymerzusammensetzung, vorliegt.

6. Verstreckter Kunststoffschlauch nach einem der Ansprüche 1-5, wobei es sich bei dem Copolyesterelastomer um ein Copolyesteresterelastomer, ein Copolyetheresterelastomer und/oder ein Copolycarbonatesterelastomer handelt.

7. Verstreckter Kunststoffschlauch nach einem der Ansprüche 1-6, wobei die Polymerzusammensetzung dispergierte Teilchen eines festen Additivs umfasst.

8. Verstreckter Kunststoffschlauch nach Anspruch 7, wobei das feste Additiv ein Pigment umfasst.

9. Verstreckter Kunststoffschlauch nach Anspruch 8, wobei das Pigment in einer Menge im Bereich von 0-2,0 Gew.-%, bezogen auf das Gesamtgewicht der Polymerzusammensetzung, vorliegt.

10. Verstreckter Kunststoffschlauch nach einem der Ansprüche 1-9, wobei die Polymerzusammensetzung ein organisches Farbmittel umfasst.

11. Verstreckter Kunststoffschlauch nach einem der Ansprüche 1-10, wobei die Polymerzusammensetzung mindestens ein zusätzliches Additiv umfasst, wobei das zusätzliche Additiv von Farbmitteln und Pigmenten verschieden ist.

12. Verstreckter Kunststoffschlauch nach Anspruch 11, wobei das zusätzliche Additiv in einer Menge von 0,01-10 Gew.-%, bezogen auf das Gesamtgewicht der Polymerzusammensetzung, vorliegt.

13. Verstreckter Kunststoffschlauch nach Anspruch 1, wobei die Polymerzusammensetzung aus:
(a) einem Copolyesterelastomer, das mindestens 50 Gew.-% eines Copolyetheresterelastomers umfasst,
(b) 0,5-5 Gew.-% eines Schmierfetts, eines Öls und/oder eines Wachsmaterials, wobei das Wachsmaterial aus der Gruppe bestehend aus Estern von Polyolen und Fettsäuren, Amiden von Polyaminen und Fettsäuren und hydrierten Ölen und Mischungen davon ausgewählt ist,
(c) 0,01-2 Gew.-% eines Pigments und/oder eines Farbmittels,
(d) 0-10 Gew.-% mindestens eines zusätzlichen Additivs
besteht, wobei die Gewichtsprozentanteile (Gew.-%) sich auf das Gesamtgewicht der Polymerzusammensetzung beziehen und die Summe von (a)-(d) 100 beträgt.

14. Verstreckter Kunststoffschlauch nach einem der Ansprüche 1-13, wobei die Außenoberflächenschicht eine Dicke von mindestens 0,025 mm aufweist.

15. Verfahren zur Herstellung eines verstreckten Kunststoffschlauchs nach einem der Ansprüche 1-14, umfassend in der angegebenen Reihenfolge einen (Co)extrusionsschritt, gegebenenfalls einen (Warm)formgebungsschritt und einen Verstreckungsschritt.

16. Autobremssystem, umfassend einen verstreckten Kunststoffschlauch mit einem verstreckten Endteil nach einem der Ansprüche 1-14 und einem in das verstreckte Endteil eingeschobenen Schlauchstutzen.

## Revendications

1. Tube en plastique étiré comprenant deux parties d'extrémité, au moins une des parties d'extrémité étant une partie d'extrémité étirée obtenue par étirage mécanique d'au moins une section de cette partie d'extrémité, et une partie allongée entre les parties d'extrémité, le tube en plastique étiré étant obtenu à partir d'un tube en plastique comprenant au moins une couche de surface externe consistant en une composition polymère comprenant au moins 50 % en poids d'un élastomère de copolyester et au moins 0,7 % en poids d'une graisse, d'une huile et/ou d'un composant cireux, rapporté au poids total de la composition polymère.

2. Tube en plastique étiré selon la revendication 1, dans lequel ledit composant est un composant cireux ayant une température de fusion d'au moins 30 °C.

3. Tube en plastique étiré selon la revendication 1 ou 2, dans lequel le composant cireux a une viscosité à l'état fondu, à 10 °C au-dessus de la température de fusion, de 10 000 mPa·s maximum.

4. Tube en plastique étiré selon l'une quelconque des revendications 1 à 3, dans lequel le composant cireux est choisi dans le groupe constitué par les esters de polyols et d'acides gras, les amides de polyamines et d'acides gras, et les huiles hydrogénées.

5. Tube en plastique étiré selon l'une quelconque des revendications 1 à 4, dans lequel la graisse, l'huile et/ou le composant cireux sont présents dans une quantité de 0,7-5 % en poids, rapporté au poids total de la composition polymère.

6. Tube en plastique étiré selon l'une quelconque des revendications 1 à 5, dans lequel l'élastomère de copolyester est un élastomère de copolyester-ester, un élastomère de copolyéther-ester, et/ou un élastomère de copolycarbonate-ester.

7. Tube en plastique étiré selon l'une quelconque des revendications 1 à 6, dans lequel la composition polymère comprend des particules dispersées d'un additif solide.

8. Tube en plastique étiré selon la revendication 7, dans lequel l'additif solide comprend un pigment.

9. Tube en plastique étiré selon la revendication 8, dans lequel le pigment est présent dans une quantité dans la gamme 0-2,0 % en poids, rapporté au poids total de la composition polymère.

10. Tube en plastique étiré selon l'une quelconque des revendications 1 à 9, dans lequel la composition polymère comprend un colorant organique.

11. Tube en plastique étiré selon l'une quelconque des revendications 1 à 10, dans lequel la composition polymère comprend au moins un additif supplémentaire, l'additif supplémentaire étant différent des colorants et pigments.

12. Tube en plastique étiré selon la revendication 11, dans lequel l'additif supplémentaire est présent dans une quantité de 0,01-10 % en poids, rapporté au poids total de la composition polymère.

13. Tube en plastique étiré selon la revendication 1, dans lequel la composition polymère est constituée par .
(a) un élastomère de copolyester, comprenant au moins 50 % en poids d'un élastomère de copolyétherester,
(b) 0,5-5 % en poids d'une graisse, d'une huile et/ou d'un matériau cireux, le matériau cireux étant choisi dans le groupe constitué par les esters de polyols et d'acides gras, les amides de polyamines et d'acides gras, les huiles hydrogénées, et les mélanges de ceux-ci,
(c) 0,01-2 % en poids d'un pigment et/ou un colorant,
(d) 0-10 % en poids d'au moins un additif supplémentaire,
dans lequel les pourcentages pondéraux (% en poids) se rapportent au poids total de la composition polymère, et la somme de (a) - (d) vaut 100.

14. Tube en plastique étiré selon l'une quelconque des revendications 1 à 13, dans lequel la couche de surface externe a une épaisseur d'au moins 0,025 mm.

15. Procédé de fabrication d'un tube en plastique étiré selon l'une quelconque des revendications 1 à 14, comprenant, dans cet ordre, une étape de (co)extrusion, éventuellement une étape de formage (à chaud), et une étape d'étirage.

16. Système de frein automobile, comprenant un tube en plastique étiré comprenant une partie d'extrémité étirée selon l'une quelconque des revendications 1 à 14 et un raccord de tuyau inséré dans la partie d'extrémité étirée.
